# EUROPÄISCHE PATENTSCHRIFT

(11) **EP 2 111 117 B1**
(45) Veröffentlichungstag und Bekanntmachung des Hinweises auf die Patenterteilung: **10.08.2016**
(21) Anmeldenummer: 07819289.5
(22) Anmeldetag: 24.10.2007
(51) Int. Cl.: A23C 9/15, A23C 9/142, A23C 3/03

(54) **VERFAHREN UND VORRICHTUNG ZUR GESCHMACKSVERBESSERUNG VON HALTBARER MILCH**
METHOD AND DEVICE FOR THE IMPROVEMENT OF THE TASTE OF NON-PERISHABLE MILK
PROCÉDÉ ET DISPOSITIF POUR AMÉLIORER LE GOÛT DU LAIT DE CONSERVATION

(30) Priorität: 10.11.2006 DE 102006053017
(43) Veröffentlichungstag der Anmeldung: 28.10.2009
(73) Patentinhaber: Tetra Laval Holdings & Finance S.A., 1009 Pully (CH)
(72) Erfinder: DYCK, Burghard, 22927 Grosshansdorf (DE)
(74) Vertreter: Kloiber, Thomas
(86) Internationale Anmeldenummer: PCT/EP2007/009237
(87) Internationale Veröffentlichungsnummer: WO 2008/055592

(56) Entgegenhaltungen:
- EP-A- 1 654 934
- WO-A-02/063969
- WO-A-2004/075666
- WO-A-2006/034857
- WO-A-2006/058538
- US-A- 5 171 603
- HARDHAM J F: "EFFECT OF PROTEIN STANDARDISATION OF MILK BY ADDITION OF UF MILK PERMEATE ON THE COMPOSITION AND STORAGE STABILITY OF UHT PROCESSED MILK" AUSTRALIAN JOURNAL OF DAIRY TECHNOLOGY, DAIRY INDUSTRY ASSOCIATION OF AUSTRALIA, MELBOURNE, AU, Bd. 53, Nr. 1, April 1998 (1998-04), Seiten 22-27, XP000750364 ISSN: 0004-9433

## Beschreibung

Beim Verbraucher ist haltbare Milch sehr beliebt. H-Milch ist eine durch Ultrahocherhitzung haltbar gemachte Milch. Sie wird deshalb auch als UHT-Milch (ultrahocherhitzte Milch) bezeichnet. Beim Ultrahocherhitzen wird die Milch für ca. 2-4 Sekunden auf 135 bis 150°C erhitzt und sofort auf Raumtemperatur heruntergekühlt. Alle pathogene und zum Verderb führenden Keime werden so abgetötet. Die abgekühlte Milch wird anschließend in sterile, lichtgeschützte Verpackungen abgefüllt. Im Gegensatz zu einer pasteurisierten Milch kann H-Milch ungeöffnet bei Raumtemperatur mehrere Monate gelagert werden und ist außerdem leichter verdaulich.

Allerdings ist UHT-Milch auch dadurch gekennzeichnet, dass sie einen so genannten Kochgeschmack aufweist. Dieses wird vom Verbraucher oft als unangenehm wahrgenommenen. In Abhängigkeit vom UHT-Erhitzungsverfahren und der UHT-Heißhaltezeit ist dieser Kochgeschmack mehr oder weniger stark ausgeprägt.

Allgemein bekannt ist außerdem der Trend zu Lebensmitteln mit reduzierten Kalorien. In der Milchwirtschaft sind die so genannten "low fat" Produkte im Trend. Nach dem Milchgesetz ist allerdings Milch ein Gemelk dem nichts zugefügt und nichts entzogen ist. Die Definition des Begriffes "Milch" ist in den letzten Jahrzehnten aber den wirtschaftlichen Notwendigkeiten angepasst worden. So ist es heute zulässig und allgemein üblich den Fettgehalt zu reduzieren. In diesem Fall spricht man von einer standardisierten Konsummilch mit den bekannten Fettgehältern von z.B. 1,5 oder 3,5% Fett. Eine Standardisierung des Proteingehaltes ist hingegen bis heute nicht zulässig. Eine proteinangereichte Milch darf daher nicht als Konsummilch bzw. Trinkmilch deklariert werden.

Der Trend zu einer Konsummilch mit 1,5 statt 3,5% Fett erklärt sich alleine mit dem Gesundheitsbewusstsein für fett- und kalorienreduzierte Produkte, nicht jedoch mit dem Geschmack. Fett ist im Gegenteil ein wesentlicher Geschmacksträger in der Milch, der die Vollmundigkeit und das Mundgefühl positiv beeinflusst.

Bei einer fettreduzierten UHT-Milch addieren sich also zwei Probleme, zum einen der Kochgeschmack und zum anderen der negative Einfluss des geringeren Fettgehaltes auf den Geschmack.

Im Rahmen der Qualitätsverbesserung für haltbare Milch sind diverse Ansatzpunkte bekannt und werden auch teilweise in der Praxis umgesetzt. Dies sind u.a.: Ein modifiziertes Temperatur/Zeitdiagramm, um die Hitzebelastung des Produktes im oberen Temperaturbereich zu reduzieren (das so genannte Turbo-Konzept), direkte Erhitzungsverfahren mit modifiziertem Temperatur/Zeitdiagramm oder Injektion von Sauerstoff zum Abbau der SH-Gruppen (Sulfhydrylgruppen).

Allerdings ist es durch diese Maßnahmen bisher nicht gelungen, den Geschmack von UHT-Milch der pasteurisierten Milch anzugleichen.

Der vorliegenden Erfindung liegt daher die Aufgabe zu Grunde, ein Verfahren anzugeben, mit dem eine haltbare UHT-Milch hergestellt werden kann, die gleichzeitig im Fettgehalt reduziert ist und trotzdem im Geschmack einer pasteurisierten Milch entspricht oder dieser vergleichbar ist. Es ist also das Ziel, das der Konsument keinen signifikanten Unterschied z.B. zwischen einer pasteurisierten Vollmilch mit 3,5% Fett im Vergleich zu einer "modifizierten" haltbaren Milch mit reduziertem Fettgehalt feststellen kann. Außerdem soll eine Vorrichtung zur Durchführung des Verfahrens vorgeschlagen werden.

Diese Aufgabe wird erfindungsgemäß dadurch gelöst, dass die in der natürlichen Milch enthaltenen Molkeproteine ganz oder teilweise mikropartikuliert werden, dass das mikrofiltrierte Permeat ultrafiltriert wird, dass das Ultrafiltrationsretentat einer Mikropartikulierung unterzogen wird und dass ein solches Mikropartikulat einem Gemisch aus mikrofiltriertem Retentat und ultrafiltriertem Permeat hinzugegeben wird. Überraschenderweise hat sich gezeigt, dass die Mikropartikulierung von Molkeprotein den Geschmack von haltbarer Milch hinsichtlich reduziertem bis nicht wahrnehmbarem Kochgeschmack und der Vollmundigkeit bzw. dem Fett-Mundgefühl positiv beeinflusst. Die Mikropartikulierung von Molkeprotein führt u.a. zur Reduzierung des Kochgeschmacks in haltbarer Milch, der Simulierung eines vollmundigen Mundgefühls mit der Konsequenz, Fett ersetzen zu können und außerdem zu einer Erhöhung der Weißkraft. Dabei werden die vorher getrennten Bestandteile der Milch wieder zusammengeführt. Sie sind dann lediglich modifiziert, aber hinsichtlich ihrer Menge und Zusammensetzung nicht verändert.

Es wurde experimentell ermittelt, dass der Geschmack besonders günstig beeinflusst wird, wenn die mikropartikulierten Molkeproteine einen Denaturierungsgrad von mindestens 80% und eine Partikelgrößenverteilung von 1-10 µm aufweisen. Hierdurch wird ein modifiziertes und im Volumen vergrößertes Molkeprotein generiert, dass mit der Dichte der Milch in etwa vergleichbar ist. Eine höhere Partikelgröße von z.B. 20 µm führt dagegen zu einem mehligen und/oder sandigen Geschmack.

Die Milch weist einen reduzierten Fettgehalt auf, der vorzugsweise etwa einem Anteil von 1,5% Fett entspricht. Hierdurch erhält man eine standardisierte Konsummilch die im Geschmack einem höheren Fettgehalt entspricht.

Um die Rohmilch in Rahm und Magermilch zu trennen, wird sie bei etwa 55°C entrahmt. Um die Molkeproteine zu erhalten, wird die Magermilch mikrofiltriert und anschließend das mikrofiltrierte Permeat ultrafiltriert.

Um eine Rückverdünnung des in der Mikrofiltrationsanlage aufkonzentriertem Mikrofiltrationsretentats zu erreichen, wird das ultrafiltrierte Permeat dem mikrofiltrierten Retentat in einem so genannten Diafiltrationsprozess hinzugegeben.

Um eine möglichst große Menge Molkeprotein aus der Magermilch zu gewinnen, werden die jeweils nacheinander geschalteten Mikro- und Ultrafiltrationsschritte einmal oder mehrmals wiederholt.

Um Milch mit einen standardisierten Fettgehalt zu erhalten, wird dem Gemisch aus Mikropartikulat, mikrofiltriertem Retentat und ultrafiltriertem Permeat ein Anteil des abgetrennten Rahmes wieder hinzugegeben, der in einem vorangegangenen Verfahrensschritt abgetrennt wurde.

Um die Haltbarkeit zu verlängern, wird die Milch ultrahocherhitzt und danach abgefüllt.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Die Figur der Zeichnung zeigt im Einzelnen:

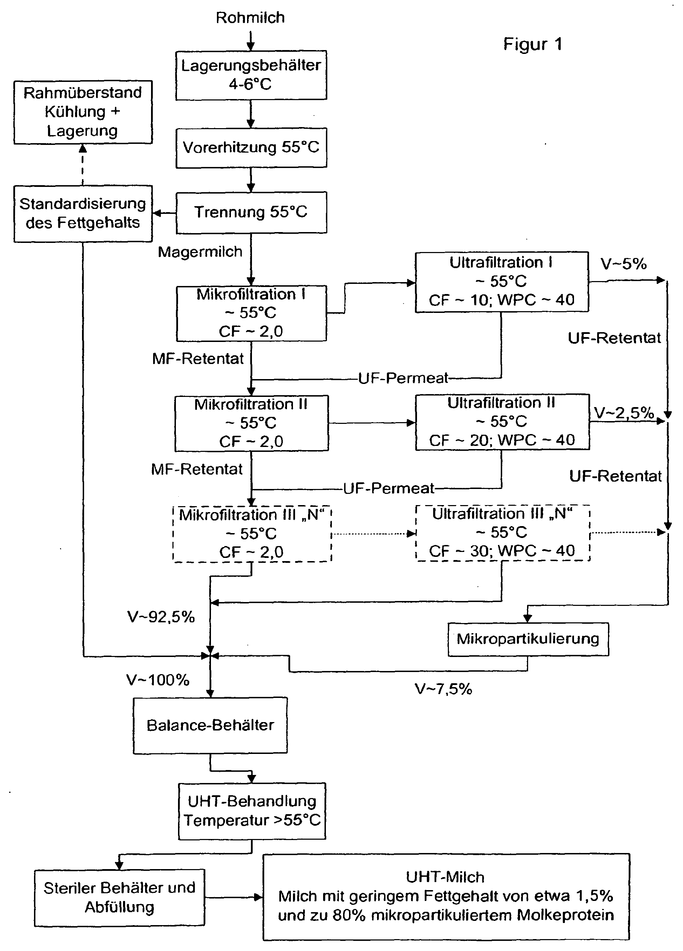

- Figur 1: eine schematische Darstellung des Herstellungsverfahrens von haltbarer Milch mit verbessertem Geschmack und

Figur 1 zeigt eine schematische Darstellung des erfindungsgemäßen Herstellungsverfahrens von haltbarer Milch mit verbessertem Geschmack in der Art eines Ablaufdiagramms. Das neue Verfahren sieht vor, milcheigene Inhaltstoffe, in unveränderter Zusammensetzung, derart zu modifizieren das diese den typischen Kochgeschmack eliminieren. Die hierfür erforderlichen Verfahrensschritte sind in der Literatur und in der Praxis als Mikropartikulationsverfahren bekannt. Bei diesem Verfahren werden Molkeproteinpartikel durch Hitze denaturiert und die aggregierten Molkenproteine anschließend mechanisch zerkleinert. Ziel des Partikulierens ist es, Molkeproteinpartikel in einem Größenbereich von wenigen Mikrometern herzustellen, wie in der DE 10 2004 041 770.9 offenbart. Die Art der mechanischen Partikelzerkleinerung ist aber nicht zwangsläufig auf den im Patent spezifizierten Schabewärmeaustauscher begrenzt. Vergleichbare mechanische Scherkräfte können auch mit anderen mechanischen Behandlungsvorrichtungen, wie z.B. mit Homogenisatoren, Röhrenwärmeaustauschern oder Lochblenden erzielt werden. Durch Prozessoptimierung kann die Ausbeute von Partikeln innerhalb des benötigten Teilchengrößenintervalls vorteilhaft verbessert werden.

Der Einsatz von mikropartikulierten Molkenproteinen in Molkereiprodukten ist eine neue Technologie, die für Wissenschaft und Praxis zunehmend interessant ist. Beschrieben und erprobt sind Verfahren zur Herstellung von mikropartikulierten Molkenprotein aus Molke und dessen Einsatz bei der Käse-, Joghurt- und Dessertherstellung. Mikropartikulierte Molkenproteine verbessern die Ausbeute und dienen als Fettersatzstoff in so genannten "low fat" Produkten.

US 5 171 603 offenbart dem Zusatz Von mikropartikulierten Molkenprotein zu Magermilch.

Die Hauptinhaltstoffe der Rohmilch sind 86,0-88,0% Wasser, 3,0-4,5% Lipide, 4,7-4,8% Laktose, 0,7-0,8% Asche und 3,2-3,6% Proteine. Die Proteine unterteilen sich in zwei Hauptfraktionen, in Caseine und die Molkenproteine. Der Anteil von Casein in Milch beträgt ca. 2,6-3,0% und der Anteil von Molkenproteinen ca. 0,6-0,62%. Damit stellt Casein mit seinen Unterfraktionen ca. 80% der Milchproteine dar. Der Anteil der Molkenproteine beträgt somit ca. 20% am Gesamtproteingehalt der Milch.

Zu den Molkenproteinen zählen die Unterfraktionen β-Lactoglobulin, α-Lactoglobulin, Serumalbumine, Immunglobuline und die Protease-Peptone Fraktionen. Mit der Modifikation von Molkenproteinen ist dieser Proteinanteil gemeint.

Der Herstellungsprozess wird im Folgenden kurz zusammengefasst: Die Rohmilch wird zunächst entrahmt und in zwei Volumenströme mit Magermilch und Rahm aufgeteilt. Der Überschussrahm wird analog zu den heutigen Prozessen separat abgeführt und verarbeitet. Aus der Magermilch wird dann das Molkenprotein zur Behandlung nach dem Mikropartikulationsprozess abgetrennt. Hierzu wird die Magermilch mikrofiltriert. Das dabei anfallende Mikrofiltrations-Permeat (MF-Permeat) wird nach dem Ultrafiltrationsprozess auf ein Molkenproteinkonzentrat WPC 35-60, jedoch vorzugsweise auf WPC 40 aufkonzentriert. Ein WPC 40 ("Whey Protein Concentrate) entspricht einem Proteinanteil von 40% bezogen auf die Trockensubstanz. Das Ultrafiltrations-Permeat (UF-Permeat) wird zum Zweck der Diafiltration dem MF-Retentatsstrom wieder zugegeben. Dieser Diafiltrationsprozess mit ein oder mehrmals nacheinander geschalteten Mikrofiltrations- und Ultrafiltrationsschritten dient dem Ziel, möglichst viel reines Molkenprotein zu gewinnen. Je nach dem gewünschten Anteil von Fettersatzstoff ist der Diafiltrationsprozess zu wiederholen. Dieser Diafiltrationsprozess ist erforderlich, um den erforderlichen Anteil von mikropartikuliertem Molkenprotein zu erzeugen, um den unerwünschten Kochgeschmack zu eliminieren. Unmittelbar vor der UHT-Behandlung erfolgt die Zugabe von mikropartikuliertem Molkenprotein in den Magermilch- oder den standardisierten Milchstrom. Der UHT-Prozess erfolgt unverändert nach einem nach dem Stand der Technik bekannten UHT-Verfahren.

Die einzelnen Verfahrensschritte können in Reihe erfolgen. Es ist aber auch denkbar, dass in der Praxis Zwischenschritte eingelegt werden. So ist es denkbar, dass z.B. die Filtrationsschritte und der Mikrofiltrationsprozess unabhängig von der UHT-Behandlung durchgeführt werden.

Nachfolgend wird der Herstellungsprozess, zwischen der Rohmilchlagerung und dem Endprodukt, der verpackten haltbaren Milch, mit Separierung, diversen Filtrationsschritten, Mikropartikulierungsprozess und UHT-Erhitzung, im Detail beschrieben: Das Ausgangsprodukt ist die Rohmilch. Wie Figur 1 zeigt, erfolgt zuerst die Separierung der Rohmilch in Magermilch und Rahm bei ca. 55°C. Vor oder nach der Zugabe vom mikropartikuliertem Molkenprotein kann die Zudosierung von Rahm für die Fettgehaltsstandardisierung in den Magermilchstrom erfolgen. Der Überschussrahm wird abgeführt.

Aus der Magermilch wird dann das Molkenprotein in nachgeschaltetem Membrantrennverfahren abgetrennt und auf eine Konzentration von ca. 4 - 8%, jedoch vorzugsweise 6% Molkenprotein aufkonzentriert, entsprechend einem WPC 40. Die Magermilch wird mikrofiltriert. Das anfallende MF-Permeat mit hohem Molkenproteinanteil wird anschließend ultrafiltriert. Das UF-Retentat, entsprechend einem WPC 35 - 60, jedoch vorzugsweise WPC 40, ist der Grundstoff für den Mikropartikulierungsprozess. Mit dem UF- Permeat erfolgt eine Rückverdünnung des in der Mikrofiltrationsanlage aufkonzentriertem MF-Retentats. Dieser Prozess ist als Diafiltrationsprozess bekannt. Für eine möglichst hohe Gewinnung von Molkenprotein aus der Magermilch wird dieser Diafiltrationsschritt mit Mikro- und Ultrafiltration ein oder mehrmals wiederholt.

Das aus der Ultrafiltration gewonnene Molkenproteinkonzentrat WPC 35 - 60, jedoch vorzugsweise WPC 40, mit ca. 6% Molkenproteinanteil, wird einem Mikropartikulierungsprozess unterzogen. Der Mikropartikulierungsprozess wird so gesteuert, das der Denaturierungsgrad über 80% liegt, mit einer Partikelgrößenverteilung zwischen 1 und 10 µm.

Der erforderliche Anteil von erforderlichem Mikropartikulat variiert in Abhängigkeit vom zu eliminierenden Kochgeschmack. Im Fall der indirekten UHT-Anlagen liegt der Anteil an Mikropartikulat wegen des stärker ausgeprägten Kochgeschmacks im Vergleich zur Herstellung auf direkten UHT-Anlagen höher.

Der erforderliche Anteil von Mikropartikulat variiert in Abhängigkeit vom gewünschten Fettersatzstoff. Für eine sensorische wahrnehmbare "Auffettung" mit Molkenproteinen ist ein mikropartikuliertes Molkenprotein von 0,1% als Ersatz für 0,4% Fett anzusetzen.

Der benötigte Fettersatzstoff kann mit folgender Formel berechnet werden: Bei einem Einsatz von Mikropartikulat mit 6 % Protein und einem Denaturierungsgrad von 80% erhält man einen empirisch ermittelten Wasserbindungsfaktor von 4. Mit dem Wasserbindungsfaktor wird die Volumenzunahme der Molkenproteine beschrieben. Tests haben gezeigt, das 0,4% mikropartikuliertes Molkeneiweiß in der Milch einem zusätzlichen Fett-Mundgefühl von 1,6% Fett entsprechen. Nach dieser pauschalen, empirisch ermittelten Formel wird ein zusätzliches Fett-Mundgefühl von 2% bei 0,5% mikropartikuliertes Molkenprotein erzeugt. Das theoretisch berechnete Fettgefühl deckt sich mit sensorischen Testergebnissen.

Nach dem Mikropartikulationsprozess wird das Mikropartikulat dem Magermilch- oder dem im Fett standardisierten Milchstrom unmittelbar vor der UHT-Behandlung zudosiert.

Die UHT-Erhitzung und Abfüllung von der modifizierten Milch erfolgt analog der bekannten Verfahren.

Als Endprodukt erhält man haltbare Milch mit einem Fettgehalt von z.B. 1,5%, die mit einer pasteurisierten Milch mit ca. 3,5% Fett geschmacklich vergleichbar ist. Die Milch ist dadurch gekennzeichnet, dass der charakteristische Kochgeschmack nicht wahrnehmbar ist.

Die mögliche Fettreduktion ist abhängig vom Anteil der mikropartikulierten Molkenproteine. Als Richtwert entspricht 0,1% mikropartikuliertes Molkenprotein einen simulierten Fettersatz von 0,4%.

Figur 2 zeigt eine schematische Darstellung des Herstellungsverfahrens von haltbarer, proteinangereicherter Milch. Durch Zugabe von mikropartikuliertem Molkeneiweiß zur standardisierten Milch vor dem UHT-Prozess wird eine geschmacklich verbesserte und ernährungsphysiologische hochwertigere haltbare Milch erzielt. Der für eine haltbare Milch charakteristische Kochgeschmack wird eliminiert. Gleichzeitig wird bei reduziertem Fettgehalt ein Fett- Mundgefühl simuliert, das einer Milch mit einem wesentlich höheren Fettgehalt, um ca. 100%, entspricht. Bei dieser Milch ist der Proteinanteil erhöht.

Der standardisierten Fertigmilch wird unmittelbar vor dem UHT-Prozess ein mikropartikuliertes Molkenproteinkonzentrat zudosiert. Der UHT-Prozess erfolgt unverändert nach einem der nach dem Stand der Technik bekannten UHT-Verfahren.

Es wird beispielsweise standardisierte Fertigmilch mit 1,5% Fett und einem natürlichem Proteingehalt von z.B. 3,4% als Ausgangsprodukt verwendet. Dann wird ein Molkenproteinpartikulat in einem Mengenanteil von 5-10%, jedoch vorzugsweise mit 8%, und einem Molkenproteinanteil im Molkenproteinpartikulat von 4-8%, jedoch vorzugsweise von 6%, zudosiert.

Die UHT -Erhitzung und Abfüllung der modifizierten Milch erfolgt entsprechend den bekannten Verfahren.

Als Endprodukt wird haltbare, proteinangereichte Milch, geschmacklich vergleichbar mit einer pasteurisierten Milch mit 3,5% Fett, d.h. mit einem um ca. 2 % höheren Fettgehalt, erhalten. Der Proteingehalt in der Milch ist um ca. 0,5% erhöht. Die ernährungsphysiologisch hochwertigen Molkenproteine sind um ca. 70% angereichert.

## Patentansprüche

1. Verfahren zur Geschmacksverbesserung von haltbarer Milch, **dadurch gekennzeichnet,**
- **dass** die in der natürlichen Milch enthaltenen Molkeproteine ganz oder teilweise mikropartikuliert werden;
- **dass** das mikrofiltrierte Permeat ultrafiltriert wird;
- **dass** das Ultrafiltrationsretentat einer Mikropartikulierung unterzogen wird; und
- **dass** ein solches Mikropartikulat einem Gemisch aus mikrofiltriertem Retentat und ultrafiltriertem Permeat hinzugegeben wird.

2. Verfahren nach Anspruch 1, **dadurch gekennzeichnet, dass** die mikropartikulierten Molkeproteine einen Denaturierungsgrad von über 80% und eine Partikelgrößenverteilung von 1-10 µm aufweisen.

3. Verfahren nach Anspruch 1 oder 2, **dadurch gekennzeichnet, dass** die Milch einen reduzierten Fettgehalt von vorzugsweise etwa 1,5% Fett aufweist.

4. Verfahren nach einem der vorhergehenden Ansprüche, **dadurch gekennzeichnet, dass** Rohmilch bei etwa 55°C entrahmt, mikrofiltriert und anschließend das mikrofiltrierte Permeat ultrafiltriert wird.

5. Verfahren nach einem der vorhergehenden Ansprüche, **dadurch gekennzeichnet, dass** das ultrafiltrierte Permeat dem mikrofiltrierten Retentat hinzugegeben wird.

6. Verfahren nach einem der vorhergehenden Ansprüche, **dadurch gekennzeichnet, dass** die nacheinander geschalteten Mikro- und Ultrafiltrationsschritte einmal oder mehrmals wiederholt werden.

7. Verfahren nach einem der vorhergehenden Ansprüche, **dadurch gekennzeichnet, dass** dem Gemisch aus Mikropartikulat, mikrofiltriertem Retentat und ultrafiltriertem Permeat ein Anteil des in einem vorangegangenen Verfahrensschritt abgetrennten Rahmes wieder hinzugegeben wird.

8. Verfahren nach einem der vorhergehenden Ansprüche, **dadurch gekennzeichnet, dass** die Milch ultrahocherhitzt und abgefüllt wird.

9. Vorrichtung zur Durchführung des Verfahrens nach einem der vorangegangenen Ansprüche, **dadurch gekennzeichnet, dass** die Vorrichtung eine Separationseinrichtung zur Abtrennung des Milchrahms und Herstellung von Magermilch, eine Vorrichtung zur Mikrofiltration der Magermilch, eine dieser nachgeschaltete Vorrichtung zur Ultrafiltration des mikrofiltrierten Permeats und eine Vorrichtung zum Hinzugeben von Mikropartikulat zu einem Gemisch aus mikrofiltriertem Retentat und ultrafiltriertem Permeat aufweist.

10. Vorrichtung nach Anspruch 9, **dadurch gekennzeichnet, dass** jeweils eine oder mehrere weitere Mikro- und Ultrafiltrationsvorrichtungen hintereinandergeschaltet sind.

11. Vorrichtung nach Anspruch 9 oder 10, **dadurch gekennzeichnet, dass** eine Vorrichtung zur Mikropartikulierung des Ultrafiltrationsretentats, vorgesehen ist.

12. Vorrichtung nach einem der Ansprüche 9 bis 11, **dadurch gekennzeichnet, dass** eine Vorrichtung zur Ultrahocherhitzung der mikropartikulierten Milch vorgesehen ist.

13. Haltbare Milch, erhalten durch ein Verfahren gemäß einem der Ansprüche 1 bis 8.

## Claims

1. Method for improving the taste of non-perishable milk, **characterised in that**
- the whey proteins in the natural milk are in part or completely microparticulated;
- the microfiltered permeate is ultrafiltered;
- the ultrafiltration retentate undergoes microparticulation; and
- a microparticulate of this type is added to a mixture of microfiltered retentate and ultrafiltered permeate.

2. Method according to claim 1, **characterised in that** the microparticulated whey proteins have a denaturation degree of more than 80 % and a particle size distribution of from 1-10 µm.

3. Method according to either claim 1 or claim 2, **characterised in that** the milk has a reduced fat content of preferably approximately 1.5 %.

4. Method according to any of the preceding claims, **characterised in that** the raw milk is skimmed at approximately 55 °C and microfiltered, and the microfiltered permeate is subsequently ultrafiltered.

5. Method according to any of the preceding claims, **characterised in that** the ultrafiltered permeate is added to the microfiltered retentate.

6. Method according to any of the preceding claims, **characterised in that** the steps of microfiltration and ultrafiltration, which follow one after the other, are repeated once or several times.

7. Method according to any of the preceding claims, **characterised in that** a proportion of the cream which was separated in a preceding method step is re-added to the mixture of microparticulate, microfiltered retentate, and ultrafiltered permeate.

8. Method according to any of the preceding claims, **characterised in that** the milk is UHT-pasteurised and bottled.

9. Device for carrying out the method according to any of the preceding claims, **characterised in that** the device comprises a separation apparatus for separating the cream and producing skimmed milk, a device for microfiltration of the skimmed milk, a device, arranged downstream of said microfiltration device, for ultrafiltration of the microlfiltered permeate, and a device for adding microparticulate to a mixture of microfiltered retentate and ultrafiltered permeate

10. Device according to claim 9, **characterised in that** in each case one or more additional microfiltration devices and ultrafiltration devices are arranged one behind the other.

11. Device according to either claim 9 or claim 10, **characterised in that** a device for microparticulation of the ultrafiltration retentate is provided.

12. Device according to any of claims 9 to 11, **characterised in that** a device for UHT pasteurisation of the microparticulated milk is provided.

13. Non-perishable milk obtained using a method according to any of claims 1 to 8.

## Revendications

1. Procédé servant à améliorer le goût du lait de conservation, **caractérisé en ce que**
- les protéines de lactosérum contenues dans le lait naturel sont microparticulées en totalité ou en partie,
- **en ce que** le perméat microfiltré est ultrafiltré,
- **en ce que** le rétentat d'ultrafiltration est soumis à une microparticulation, et
- **en ce qu'**un microparticulat de ce type est ajouté à un mélange composé d'un rétentat microfiltré et d'un perméat ultrafiltré.

2. Procédé selon la revendication 1, **caractérisé en ce que** les protéines de lactosérum microparticulées présentent un degré de dénaturation supérieur à 80 % et une répartition granulométrique de 1 - 10 µm.

3. Procédé selon la revendication 1 ou 2, **caractérisé en ce que** le lait présente une teneur en matières grasses réduite de préférence d'environ 1,5 %.

4. Procédé selon l'une quelconque des revendications précédentes, **caractérisé en ce que** du lait cru est écrémé, microfiltré à une température d'environ 55 °C, puis le perméat microfiltré est ultrafiltré.

5. Procédé selon l'une quelconque des revendications précédentes, **caractérisé en ce que** le perméat ultrafiltré est ajouté au retentat microfiltré.

6. Procédé selon l'une quelconque des revendications précédentes, **caractérisé en ce que** les étapes de micro- et d'ultrafiltration se suivant sont répétées à une ou à plusieurs reprises.

7. Procédé selon l'une quelconque des revendications précédentes, **caractérisé en ce qu'**une proportion de la crème séparée lors d'une étape de procédé antérieure est à nouveau ajoutée au mélange composé du microparticulat, du rétentat microfiltré et du perméat ultrafiltré.

8. Procédé selon l'une quelconque des revendications précédentes, **caractérisé en ce que** le lait est chauffé à température ultra haute et conditionné.

9. Dispositif servant à mettre en oeuvre le procédé selon l'une quelconque des revendications précédentes, **caractérisé en ce que** le dispositif présente un système de séparation servant à isoler la crème de lait et à fabriquer du lait écrémé, un dispositif servant à la microfiltration du lait écrémé, un dispositif installé en aval de ce dernier servant à l'ultrafiltration du perméat microfiltré et un dispositif servant à l'ajout de microparticulat à un mélange composé d'un rétentat microfiltré et d'un perméat ultrafiltré.

10. Dispositif selon la revendication 9, **caractérisé en ce que** respectivement un ou plusieurs dispositifs de micro- et d'ultrafiltration sont montés les uns derrière les autres.

11. Dispositif selon la revendication 9 ou 10, **caractérisé en ce qu'**un dispositif servant à la microparticulation du rétentat d'ultrafiltration est prévu.

12. Dispositif selon l'une quelconque des revendications 9 à 11, **caractérisé en ce qu'**un dispositif de chauffage à température ultra haute du lait microparticulé est prévu.

13. Lait de conservation, obtenu par un procédé selon l'une quelconque des revendications 1 à 8.
